# EUROPÄISCHE PATENTSCHRIFT

(11) **EP 0 357 878 B1**
(45) Veröffentlichungstag und Bekanntmachung des Hinweises auf die Patenterteilung: **28.07.1993**
(21) Anmeldenummer: 89109297.5
(22) Anmeldetag: 23.05.1989
(51) Int. Cl.: A47J 31/04, A47J 31/06

(54) **Elektrisch betriebenes Gerät zum Zubereiten von Aufgussgetränken wie Kaffee, Tee od.dgl., insbesondere Kaffeeautomat**
Electrical apparatus for making hot drinks such as coffee, tea or the like, especially a coffee machine
Machine électrique pour la préparation de boissons chaudes telles que café ou thé

(30) Priorität: 31.08.1988 DE 3829417
(43) Veröffentlichungstag der Anmeldung: 14.03.1990
(73) Patentinhaber: Robert Krups GmbH & Co. KG, 42719 Solingen (DE)
(72) Erfinder: Henn, Stefan, D-5650 Solingen 1 (DE)
(74) Vertreter: Buse, Karl Georg, Dipl.-Phys.

(56) Entgegenhaltungen:
- DE-U- 8 120 744
- FR-A- 1 161 383
- FR-A- 2 160 634
- FR-A- 2 593 054
- GB-A- 345 628
- GB-A- 2 199 486
- US-A- 1 774 927

## Beschreibung

Die Erfindung bezieht sich auf ein elektrisch betriebenes Gerät zum Zubereiten von Aufgußgetränken, wie Kaffee,, Tee od.dgl., insbesondere Kaffeeautomat, mit einem Gehäuse in Kannenform, dessen Innenraum durch wenigstens eine Trennwand in einen Frischwasserbehälter und in einen mit einer Ausgießöffnung versehenen Aufnahmeraum für das fertige Getränk unterteilt ist, wobei in dem Frischwasserbehälter ein Steigrohr angeordnet ist, durch welches das mittels einer Heizung erhitzte Wasser einem das Kaffeemehl od.dgl. aufnehmenden, mit einer Abdeckung versehenen Filter zuführbar ist, durch dessen Auslaß das fertige Getränk in den Aufnahmeraum abfließt, wobei einerseits der Filterkörper zwischen dem Frischwasserbehälter und der Abdeckung des Kaffeeautomaten druckdicht angeordnet ist und andererseits dem Filterkörper das erhitzte Wasser über das Kaffeemehl verteilende Einrichtungen zugeordnet sind und bei der dem Filterkörper des Kaffeeautomaten das erhitzte Wasser durch eine Öffnung seines Bodens von unten zuführbar ist und die Verteilereinrichtung des Filterkörpers als Verteilerdüse ausgebildet ist.

Elektrisch betriebene Geräte zum Zubereiten von Aufgußgetränken, wie Kaffee, Tee od.dgl. sind in mannigfachen Ausführungsformen bekannt. So gibt es eine Kaffeemaschine, die als Kanne ausgebildet ist und die Gegenstand der DE-U 71 34 272 ist. Bei dieser kannenartigen Kaffeemaschine ist der Innenraum durch eine Trennwand in zwei Kammern unterteilt, von denen die eine als Frischwasserbehälter und die andere als Kaffeebehälter ausgebildet ist. In dem Frischwasserbehälter ist eine Steigleitung und ein nach Art eines Tauchsieders ausgebildetes Heizelement angeordnet. Auf den Kaffeebehälter ist bei dieser Ausführungsform lösbar ein Kaffeefilter aufgesetzt. Die Kanne hat in ihrem oberen Bereich einen Ausguß. In diese vorbekannte Kanne ist deckseitig ein becherförmiger Brühwasserbehälter eingesetzt, in den die Steigleitung über einen Überlauf einmündet und der den Frischwasserbehälter deckseitig dicht verschließt. Durch Querstege, welche eine Überlaufschwelle bilden, ist der Brühwasserbehälter in zwei Kammern unterteilt. Oberhalb des Kaffeefilters hat der Brühwasserbehälter eine Auslauföffnung, die derart ausgebildet und angeordnet ist, daß der Auslaufquerschnitt der einen Kammer größer ist als der der anderen. Nach oben hin ist die Kanne durch einen Steckdeckel verschlossen. Beim bestimmungsgemäßen Gebrauch wird nach Einfüllen des Kaffeemehls in den Filter der Brühwasserbehälter aufgesetzt und die Kanne mit dem Deckel verschlossen. Danach wird das Heizelement eingeschaltet. Sobald der Dampfdruck in dem Frischwasserbehälter ausreicht, wird Brühwasser über die Steigleitung in den Brühwasserbehälter befördert, wobei zunächst die eine und anschließend die andere Kammer mit Brühwasser gefüllt wird. Das Brühwasser gelangt durch eine Auslauföffnung in den Filter. Bei dieser Ausführungsform muß das Aufnahmevolumen des Brühwasserbehälters so bemessen sein, daß das gesamte im Frischwasserbehälter befindliche Wasser abzüglich der innerhalb der Förderzeit durch die Auslauföffnung ablaufenden Wassermenge aufgenommen werden kann.

An sich ist ein derartig ausgebildetes, elektrisch betriebenes Gerät zum Zubereiten von Aufgußgetränken, wie Kaffee, Tee od.dgl. vorteilhaft, weil es eine kompakte Bauweise hat und weil in den beiden Kammern der Kanne sowohl das Frischwasser als auch das fertige Getränk aufgenommen werden kann. Dabei ergibt sich der weitere Vorteil, daß die Kanne unmittelbar zum Ausgießen des fertigen Getränkes benutzt werden kann.

Auf der anderen Seite ist diese bekannte Ausführungsform des elektrisch betriebenen Gerätes zum Zubereiten von Ausgußgetränken jedoch nachteilig, insbesondere weil mit ihr nur eine verhältnismäßig geringe Menge von Kaffee hergestellt werden kann. Dies liegt vor allem daran, daß das im Filter befindliche Kaffeemehl und das diesem zugeführte Wasser lediglich unter Atmosphärendruck stehen. Insbesondere bei einer größeren Kaffeemehlmenge in dem Filter erfolgt ein langsames Ausfließen in die Auffangkammer der Kanne. Derartige sogenannte Kompakt-Kaffeemaschinen haben sich daher in der Praxis bisher nicht durchgesetzt. Sie werden meist nur dann benutzt, wenn es um die Herstellung einer geringen Menge von Kaffee od.dgl. geht.

Es gibt auch elektrisch betriebene Geräte zum Zubereiten von Aufgußgetränken, wie Kaffee, Tee od.dgl., die als Druckgerät ausgebildet sind. Mit ihnen kann man mühelos größere Mengen von Kaffee herstellen. Nicht zuletzt deshalb, weil das über dem Kaffeemehl stehende Wasser unter einem wesentlich höheren Druck als Atmosphärendruck steht, so daß ein schnelles Durchlaufen des heißen Wassers durch das Kaffeemehl erfolgt.

Eine solche Ausführungsform eines elektrisch betriebenen Gerätes zum Zubereiten von Aufgußgetränken, wie Kaffee, Tee od.dgl. ist in der GB-A 345 628 enthalten. Dieser als Kanne ausgebildete Kaffeeautomat hat einerseits eine Ausgießtülle und andererseits auf der gegenüberliegenden Seite einen Handgriff. Durch eine quer im Gehäuse angeordnete Trennwand wird der Frischwasserbehälter von dem Aufnahmeraum für den Kaffee od.dgl. getrennt. An der Trennwand ist ein in den Aufnahmeraum ragender Rohrabschnitt vorhanden, der in seinem oberen Bereich einen kegeligen Endabschnitt aufweist. In diesen greift - und zwar unter Abdichtung - ein Mittelteil der Steigleitung ein. Die Steigleitung selbst endet mit ihrem unteren Ende innerhalb des Frischwasserbehälters und mit ihrem oberen Ende in dem Filterraum. Das obere Ende der Steigleitung wirkt mit einem Abschlußstopfen zusammen, der in ein Gewinde der Abdeckung des Gehäuses eingeschraubt ist. Unterhalb der Stirnfläche des Stopfens sind in der Steigleitung über die Umfangsfläche verteilt Auslaßöffnungen vorgesehen. An sich hat diese bekannte Ausführungsform des elektrisch betriebenen Gerätes zum Zubereiten von Aufgußgetränken, wie Kaffee, Tee od.dgl. eine kompakte, kannenförmige Gestalt, und es kann mit diesem Gerät eine größere Menge von Kaffee hergestellt werden. Dies durch den hohen Dampfdruck, der beim Erhitzen des Wassers im Frischwasserbehälter entsteht.

Durch diesen erhöhten Druck wird das heiße Wasser schnell durch das im Filter befindliche Kaffeemehl hindurchgetrieben. Die dem Filterkörper dabei zugeordneten Verteilereinrichtungen sorgen dafür, daß das erhitzte Wasser über das im Filterraum des Filterkörpers befindliche Kaffeemehl verteilt wird.

Auf der anderen Seite hat die bekannte Ausführungsform des elektrisch betriebenen Gerätes zum Zubereiten von Aufgußgetränken, wie Kaffee, Tee od.dgl. den Nachteil, daß die Steigleitung verhältnismäßig kompliziert aufgebaut ist. Insbesondere muß sie einen verdickten kegelförmigen Mittelteil haben, der dem kegeligen Endteil des in den Aufnahmeraum hineinragenden Rohrabschnittes angepaßt ist, und zwar so, daß eine druckdichte Verbindung entsteht. Eine weitere Ausführungsform eines gattungsgemäßen Kaffeeautomaten ist in der FR-A 1 161 383 offenbart. Hier ist zwar die Ausbildung der Steigleitung einfach, weil ein gerader, hohlzylinderförmiger Körper benutzt werden kann. Es fehlen jedoch Verteilereinrichtungen, ins-besondere solche, die als Verteilerdüse ausgebildet sind.

Der Erfindung liegt die Aufgabe zugrunde, elektrisch betriebene Geräte zum Zubereiten von Aufgußgetränken, wie Kaffee, Tee od.dgl. der eingangs näher beschriebenen Art weiter zu verbessern. Insbesondere soll eine Verbesserung der Anbringung des Steigrohres an den benachbarten Gehäuseteilen verbessert werden und zwar mit wohlfeilen Mitteln.

Gelöst wird diese Aufgabe erfindungsgemäß dadurch, daß der Boden des Filterkörpers ein mit dem Steigrohr verbindbares Anschlußrohr aufweist, das mit der in den Filterraum ragenden Verteilerdüse in Verbindung steht. Durch die erfindungsgemäße Ausbildung ist es möglich, in an sich bekannter Weise ein hohlzylindrisches Steigrohr zu verwenden, das in einfachster Weise mit dem Boden des Filterkörpers verbunden werden kann. Das Anschlußrohr des Bodens kann dabei entweder direkt mit dem Steigrohr verbunden werden oder aber unter Benutzung eines Zwischenrohres, welches dann seinerseits mit dem einen Ende in das Steigrohr eingreift und mit dem anderen Ende sich im Anschlußrohr des Filterkörpers befindet.

Bei der bevorzugten Ausführungsform der Erfindung weist die Verteilerdüse eine obere, quer zur Wasserzufuhreinrichtung liegende Begrenzungswand auf, an die sich Verbindungsstege anschließen, deren andere Enden in den Boden des Filterkörpers übergehen und die Austrittsöffnungen zwischen sich einschließen. Bei dieser Gestaltung der Verteilerdüse wird somit das zunächst im Steigrohr senkrecht beförderte Wasser quer dazu verteilt. Diese Richtungsänderung bei der Bewegung des erhitzten Wassers wird durch die obere Begrenzungswand der Verteilerdüse erreicht. Nach dem Umlenken können dann die Wasserteilchen durch die Austrittsöffnungen der Verteilerdüse in den Filterraum gelangen. Da sie die Verteilerdüse mit beachtlicher Geschwindigkeit verlassen, ist dafür gesorgt, daß das erhitzte Wasser bis zu den Seitenwandungen des filterraumes gelangt und daß damit das gesamte Kaffeemehl von dem erhitzten Wasser erfaßt wird.

Es empfiehlt sich, die Verbindungsstege und die Austrittsöffnungen der Verteilerdüse jeweils untereinander gleich zu gestalten und sie auf einem Hohlkegelmantel liegen zu lassen, dessen den kleinsten Durchmesser aufweisende Öffnung durch die Begrenzungswand verschlossen ist. Durch eine solche Ausgestaltung wird eine wirtschaftliche Herstellung der Verteilerdüse bzw. des Filterkörpers erreicht.

Nach einem weiteren Vorschlag der Erfindung weist die Seitenwand des Filterraumes des Filterkörpers Austrittsdurchbrüche auf, denen ein gemeinsamer Filter zugeordnet ist. Dieser gemeinsame Filter ist vorzugsweise als Dauerfilter ausgebildet. Dieser ist - wie grundsätzlich bekannt - somit vielfach benutzbar.

Dabei empfiehlt es sich, den Filter als Filterring auszubilden, der aus einem Rahmen besteht, an dem unter Freilassung von Fenstern ein Dauerfilter befestigt ist. Der Rahmen eines solchen Filterringes ist dabei zweckmäßig aus konzentrischen Ringen gebildet, die jedoch unterschiedlichen Durchmesser haben, wobei diese Ringe durch Verbindungsstege miteinander verbunden sind. Zwischen diesen Verbindungsstegen liegen dann die Fenster. Das Befestigen des Dauerfilters am Filterring kann mit den in der Technik bekannten Verbindungsmitteln erfolgen.

An sich wäre es möglich, einen solchen Filterring unmittelbar an den Seitenwandungen des Filterkörpers festzulegen. Bevorzugt wird jedoch die Verwendung eines Halteringes, mit dem der Filterring an der Seitenwand des Filterkörpers festgelegt ist.

Dabei empfiehlt es sich, diesen Halterring aus einem oberen Ring und einem unteren Ring bestehen zu lassen, die unter Freilassung von Fenstern über Verbindungsstege miteinander vereinigt sind. Ein solcher Haltering kann einstückig aus einem Kunststoff hergestellt werden.

Vorgesehen ist, daß der untere Ring dieses Halteringes in einen Lagerraum des Bodens des Filterkörpers eingreift, während der obere Ring mit seiner Außenseite an einer Abstützfläche der Seitenwand des Filterkörpers anliegt. Dabei liegen die Austrittsdurchbrüche zwischen der erwähnten Abstützfläche und der Oberkante des Lagerraumes.

Grundsätzlich wäre es möglich, dem Haltering Rastelemente zuzu-ordnen, die mit Gegenrasten an den Seitenwandungen des Filterkörpers zusammenwirken. Vorgezogen wird jedoch, den Haltering mit der Seitenwand des Filterkörpers fest zu verbinden, vorzugsweise zu verschweißen. Diese feste Verbindung des Halteringes mit dem Filterkörper wird insbesondere dann gewählt, wenn ein Dauerfilter zum Einsatz kommt, also ein solcher, der über einen längeren Zeitraum benutzt werden kann, ohne ausgetauscht zu werden.

Nach einem weiteren Vorschlag der Erfindung sind dem Filterkörper des Gerätes Zentrier- und Aufstellkörper zugeordnet. Diese sind zweckmäßig der Unterseite des Bodens des Filterkörpers unmittelbar angeformt. In der Regel genügt es, wenn drei solcher Zentrier- und Aufstellkörper vorhanden sind. Diese Zentrier- und Aufstellkörper haben einmal den Zweck, daß sie beim Aufsetzen des Filterkörpers auf den Frischwasserbehälter mit den Innenwandungen des letzteren in Verbindung kommen und dabei ein zentriertes Aufstecken des Filterkörpers auf den Frischwasserbehälter ermöglichen. Zum anderen dienen die Zentrier- und Aufstellkörper dazu, beim Nichtgebrauch des Filterkörpers diesen auf einer Fläche, beispielsweise auf einem Tisch, abstellen zu können. Um dieses zu ermöglichen, sind die Zentrier- und Aufstellkörper so lang bemessen, daß sie das Anschlußrohr des Bodens des Filterkörpers längenmäßig überragen. Sofern drei solcher Zentrier- und Aufstellkörper benutzt Werden, sind diese zweckmäßig untereinander gleichgestaltet und um jeweils 120° versetzt zueinander angeordnet. Nach einem weiteren Vorschlag der Erfindung besteht der druckdicht zwischen dem Frischwasserbehälter und der Abdeckung des Gerätes angeordnete Filterkörper aus einem Unterteil und einem Oberteil, die zu einer Baueinheit vereinigt sind. Das Vereinigen der beiden Teile des Filterkörpers zu einer Baueinheit geschieht mit an sich bekannten Mitteln. Z.B. können die beiden Teile miteinander verschweißt sein. Daneben können aber auch lösbare Befestigungselemente, wie Schrauben od.dgl. eingesetzt werden. Eine solche Baueinheit hat Zuleitungskanäle für das erhitzte Wasser und ist mit einem Verteilersieb ausgerüstet, welches oberhalb des Kaffeemehls lagert, das seinerseits auf einem Filter, insbesondere Papierfilter angeordnet ist, unter dem sich Abflußbohrungen befinden, denen ein in den Aufnahmeraum des Kaffeeautomaten einmündender Auslauf nachgeschaltet ist. Bei dieser Ausführungsform wird somit ein Wegwerffilter, in der Regel ein Papierfilter benutzt, der lose auf dem Boden des Filterraumes aufgelegt wird und dessen Durchmesser demjenigen des im Querschnitt kreisförmigen Filterraumes angepaßt ist.

Der Unterteil des Filterkörpers weist dabei zweckmäßig einen Verbindungsstutzen zum Steigrohr auf, der mit einer durchlaufenden Bohrung versehen ist, die in eine Erweiterung übergeht, die dem Filterraum zugekehrt ist und von der Querkanäle ausgehen, die ihrerseits mit Längskanälen in Verbindung stehen, an deren Ende sich eine Austrittsöffnung befindet, welcher das Verteilersieb nachgeschaltet ist. Auch in diesem Falle besteht die Möglichkeit, das Steigrohr direkt mit dem Verbindungsstutzen zu kuppeln. Im Bedarfsfall kann jedoch auch ein Zwischenrohr eingesetzt werden, durch welches ein vorhandener Abstand zwischen der Oberkante des Steigrohres und der Stirnfläche des Verbindungsstutzens überbrückt werden kann.

Es empfiehlt sich, in die Erweiterung der Filterkörpers eine vorzugsweise kegelige Verteilerfläche hineinragen zu lassen, deren Spitze der Bohrung des Verbindungsstutzens zugekehrt ist. Das aus dem Steigrohr kommende, erhitzte Wasser wird von dieser Verteilerfläche umgelenkt und gelangt dabei in die Querkanäle.

Hinsichtlich der Ausbildung und Gestaltung des Filtersiebes ergeben sich mehrere Möglichkeiten. Nach einem ersten Vorschlag der Erfindung ruht das Filtersieb mittels einer Lagerfläche auf der Stirnfläche des Oberteiles des Filterkörpers. In diesem Falle ist ein Abstand der Unterseite des Filtersiebes zum Kaffeemehl im Filterraum vorhanden. Dies bedeutet, daß das durch die Öffnungen des Filtersiebes abtropfende Wasser einen mehr oder weniger langen Weg zurücklegen muß, ehe es auf das Kaffeemehl auftrifft.

Nach einem anderen Vorschlag der Erfindung lagert das Verteilersieb unmittelbar auf dem im Filterraum des Filterkörpers befindlichen Kaffeemehl. In diesem Falle ist das Filtersieb durchmessermäßig etwas kleiner gehalten als der Durchmesser der Filterraumes des Filterkörpers, so daß das Filtersieb mit Spiel in den Filterraum eingebracht werden kann. Je nach der Menge des in den Filterraum eingebrachten Kaffeemehl liegt dann das Filtersieb mehr oder weniger hoch in dem Filterraum. Das auf die Oberseite des Kaffeemehls auftreffende Wasser gelangt nach Durchtritt durch die Öffnungen des Siebes unmittelbar in das Kaffeemehl.

Man kann bei dieser Ausführungsform des Verteilersiebes dieses auch innrhalb des Filterraumes drehen, wobei die Oberseite des Filtersiebes zweckmäßig eine Handhabe aufweist. Durch eine solche Drehbewegung kann für eine gleichmäßige Verteilung des in den Filterraum eingebrachten Kaffeemehls gesorgt werden. Dies hat den Vorteil, daß das Kaffeemehl im Filterraum überall gleich hoch angeordnet ist, was für die Ausnutzung des Kaffeemehls und für das Durchdringen des Wassers von Vorteil ist.

Es empfiehlt sich, daß die Querkanäle sternförmig von der Erweiterung des Unterteils des Filterkörpers ausgehen, während die Längsbohrungen in der Nähe der Umfangsfläche des Oberteiles angeordnet sind und auf einem Kreis liegen, dessen Mittelpunkt mit demjenigen des im Querschnitt kreisförmigen Oberteiles zusammenwirkt.

Es ist zweckmäßig, wenn die Abschlußbohrungen im Oberteil des Filterkörpers ebenfalls auf einem Kreis liegen, dessen Durchmesser jedoch um ein Mehrfaches kleiner ist als der Durchmesser des Kreises, auf dem die Längskanäle liegen. Dies bedeutet, daß die Längskanäle seitlich neben den Begrenzungswandungen des Filterraumes angeordnet sind, während die Abflußbohrungen im Boden des Oberteils des Filterkörpers verlaufen. Die Längskanale sind dabei bis in Höhe der Oberkante des Filterraumes geführt. Sie haben an ihren Enden die Auslässe, die das erhitzte Wasser zu dem Filtersieb führen.

Es empfiehlt sich, vom Mittelpunkt des Oberteiles des Filterkörpers sternförmig Rippen ausgehen zu lassen, die bis zu den Begrenzungswandungen des Filterraumes durchlaufen. Von den Begrenzungswandungen des Filterraumes gehen ferner kurze Rippen aus, die jeweils in der Mitte zwischen zwei langen Rippen liegen, zum Mittelpunkt des Oberteiles des Filterkörpers gerichtet sind und jeweils mit Abstand von einer Abflußbohrung des Oberteiles enden. Auf den Oberseiten dieser Rippen liegt dann das Filterpapier auf. Es befindet sich daher im Abstand vom eigentlichen Boden des Oberteiles, so daß ein Zusetzen der im Boden befindlichen Abflußbohrungen nicht stattfindet. Dabei empfiehlt es sich, zu beiden Seiten jeder langen Rippe Schrägflächen anzuordnen. Diese erleichtern das Abfließen des durch den Papierfilter durchdringenden Kaffees in Richtung auf die Abflußbohrungen des Oberteils des Filterkörpers.

Nach einem weiteren Vorschlag der Erfindung sind das Gehäuse, der Frischwasserbehälter, das Steigrohr und die Halterippen zu einer einstückigen Baueinheit zusammengefaßt. Dieser Baueinheit ist der Filterkörper druckdicht unter Benutzung eines Deckels abnehmbar zugeordnet. Durch diese einstückige Baueinheit wird eine besonders wirtschaftliche Herstellung des Gerätes erreicht. Verbindungsmittel zwischen den genannten Teilen der Baueinheit kommen in Fortfall. Eine solche Baueinheit wird dann zweckmäßig mit dem Handgriff ausgerüstet, der die Bedienung des Gerätes, insbesondere das Ausschütten des fertigen Getränkes aus dem Ausguß des Gehäuses erleichtert. Ein solcher Handegriff kann mit grundsätzlich bekannten Verbindungsmitteln mit der Baueinheit verbunden werden.

In den Zeichnungen ist die Erfindung in mehreren Ausführungsbeispielen dargestellt und zwar zeigen:
- Fig. 1: in einem mittleren Längsschnitt ein erstes Ausführungsbeispiel eines erfindungsgemäß ausgebildeten Gerätes zum Zubereiten von Heißgetränhken, wobei oberhalb des Deckels dieses Gerätes ein Verteiler im Längsschnitt angegeben ist, der wahlweise bei den erfindungsgemäßen Geräten benutzt wird,
- Fig. 2: im vergrößerten Maßstab eine Draufsicht auf einen Haltering, der in den Filterraum des Gerätes gemäß der Fig. 1 eingesetzt wird,
- Fig. 3: einen Schnitt durch den Haltering der Fig. 2 der Zeichnung entlang der Linie III-III,
- Fig. 4: in Seitenansicht einen Filterring, der ebenfalls in den Filterraum des Gerätes nach der Fig. 1 eingesetzt wird,
- Fig. 5: in vergrößertem Maßstab eine Unteransicht des Filterkörpers, der in das Gerät gemäß der Fig. 1 eingesetzt wird,
- Fig. 6: einen Schnitt durch den Filterkörper der Fig. 5 entlang der Linie VI-VI dieser Fig. 5,
- Fig. 7: in nochmals vergrößertem Maßstab einen Schnitt durch die Verteilerdüse des Filtergerätes nach der Fig. 6 entlang der Linie VII-VII dieser Figur,
- Fig. 8: im vergrößerten Maßstab einen Teilschnitt durch den Filterkörper des Gerätes nach der Fig. 1 nach dem Anbringen des Filtersiebes und des Halteringes in dem Filterraum des Filterkörpers, teilweise weggebrochen und bei fehlenden Dichtungen,
- Fig. 9: im Längsschnitt eine zweite Ausführungsform des erfindungsgemäßen Gerätes zum Zubereiten von Heißgetränken,
- Fig. 10: eine dritte Ausführungsform eines erfindungsgemäß ausgebildeten Gerätes zum Zubereiten von Heißgetränken, ebenfalls im Längsschnitt,
- Fig. 11: im Schnitt ein Verteilersieb für den Filterkörper, der in ein Gerät gemäß der Fig. 9 oder der Fig. 10 eingesetzt werden kann,
- Fig. 12: in Draufsicht den Oberteil des Filterkörpers, der in ein Gerät gemäß den Fig. 9 oder 10 eingesetzt wird,
- Fig. 13: einen Schnitt durch den Oberteil gemäß der Fig. 12 der Zeichnung entlang der Linie XIII-XIII,
- Fig. 14: eine Draufsicht auf den Unterteil des Filterkörpers, welcher in ein Gerät gemäß der Fig. 9 oder 10 eingesetzt wird,
- Fig. 15: einen Schnitt durch den Unterteil gemäß der Fig. 14 entlang der Linie XV-XV und
- Fig. 16: einen Schnitt, teilweise weggebrochen, durch einen Teilbereich des Oberteils des Filterkörpers entlang der Linie XVI-XVI der Fig. 12 der Zeichnungen.

Es sei zunächst erwähnt, daß in den Figuren der Zeichnungen nur diejenigen Teile eines elektrisch betriebenen Gerätes zum Zubereiten von Aufgußgetränken, wie Kaffee, Tee od.dgl. wiedergegeben sind, welche für das Verständnis der Erfindung Bedeutung haben. So fehlen insbesondere die elektrischen Zuleitungen und die mit diesen zusammenwirkenden Schalt- und Steuereinrichtungen. Alle fehlenden Teile können im übrigen eine bekannte Ausbildung haben und in ebenfalls an sich bekannter Weise in dem Gehäuse oder am Gehäuse des Gerätes untergebracht bzw. angebracht sein.

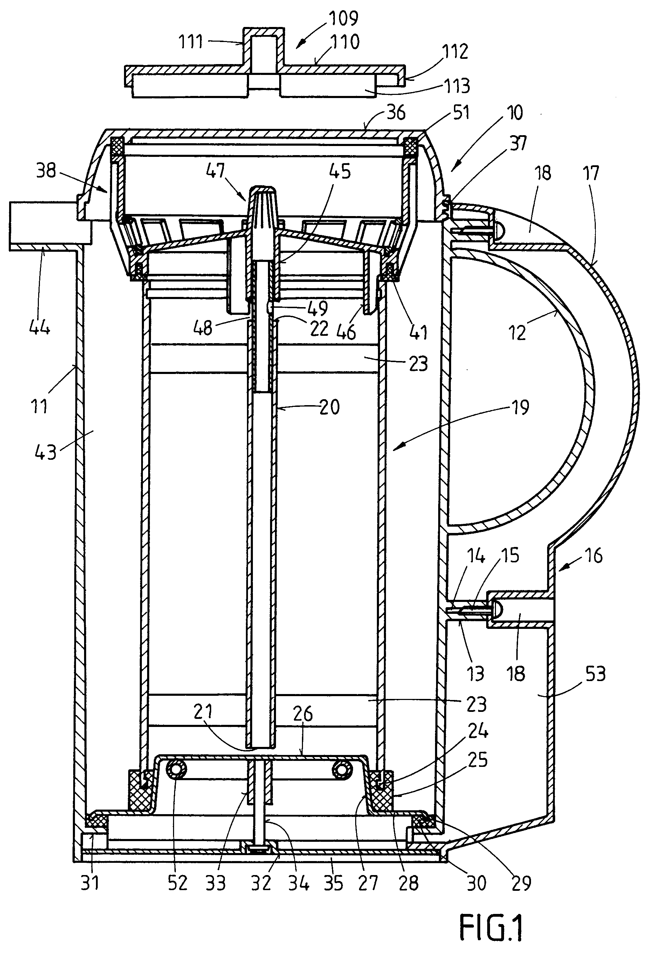

Das dem Ausführungsbeispiel nach den Fig. 1 bis 8 zugrunde gelegte, elektrisch betriebene Gerät dient generell zum Zubereiten von Aufgußgetränken, wie Kaffee, Tee od. dgl. Der Einfachheit halber wird nachfolgend jedoch nur von einem Kaffeeautomaten gesprochen. Dieser Kaffeeautomat ist generell mit 10 bezeichnet. Zu dem Kaffeeautomat 10 gehört ein Gehäuse 11, das im gewählten Ausführungsbeispiel im wesentlichen als nach beiden Seiten hin offener Zylinder ausgebildet ist. Das Gehäuse ist aus einem wärmeisolierenden Kunststoff hergestellt. An seiner einen Seite hat des Gehäuse 11 an seiner Außenseite liegend einen mit 12 bezeichneten Teil eines Handgriffes. Dieser ist der Außenwand des Gehäuses unmittelbar angeformt. Unterhalb und oberhalb dieses angeformten Teiles 12 des Handgriffes sind an der Außenfläche des Gehäuses 11 Befestigungsvorsprünge 13 angeordnet. Jeder Befestigungsvorsprung 13 hat eine Sacklochbohrung 14 für ein Befestigungselement 15, welches beispielsweise als Schraube ausgebildet ist. Die Sacklochbohrung 14 kann dabei unmittelbar mit einem Innengewinde versehen sein, welches mit dem Außengewinde der Befestigungsschraube 15 zusammenwirken kann. Es können aber auch selbstschneidende Schrauben benutzt werden, so daß dann die Anordnung eines Gewindes im Bereich der Wandung der Sacklochbohrung entfällt.

Die Köpfe der Befestigungselemente 15 liegen verdeckt in Ausnehmungen 18. Diese Ausnehmungen 18 sind Bestandteil eines generell mit 16 bezeichneten Ergänzungsteiles, welcher mittels der Befestigungselemente 15 lösbar mit dem Gehäuse 11 des Kaffeeautomaten 10 verbunden wird. Der obere Bereich 17 dieses Ergän-zungsteiles 16 ist dem dem Gehäuse 11 angeformten Teil des Handgriffes 12 entsprechend gestaltet, liegt jedoch mit Abstand von diesem Teil. Im unteren Bereich entsteht nach dem Anbringen des Ergänzungsteiles 16 an dem Gehäuse 11 ein Unterbringungsraum 53, in dem elektrische Schalt- und Steuerteile oder z.B. auch eine Zugentlastung für das einzuführende Kabel untergebracht werden können. Die Innenwand des Unterbringungsraumes 53 wird durch den benachbarten Bereich der Außenwand des Gehäuses 11 gebildet.

Der nicht näher bezeichnete Innenraum des Gehäuses 11 wird in zwei kammerartige Räume unterteilt. Zu diesem Zweck ist im Inneren des Gehäuses 11 ein Frischwasserbehälter 19 angeordnet, der als beidseitig offener Hohlzylinder ausgebildet ist. In der Längsmitte des hohlzylindrischen Frischwasserbehälters 19 ist ein Steigrohr 20 angebracht, welches über Halterippen 23 mit der Innenwand des Frischwasserbehälters verbunden ist. Im Ausführungsbeispiel nach der Fig. 1 der Zeichnung sind solche Halterippen sowohl am unteren Teil als auch am oberen Teil des Steigrohres 20 vorgesehen. Im dargestellten Ausführungsbeispiel sind somit insgesamt acht Halterippen 23 vorhanden, die in zwei Gruppen aufgeteilt sind. In jeder Gruppe liegen die Halterippen 23 um einen Winkel von 90° voneinander entfernt. Die untere Öffnung des Steigrohres 20 ist mit 21, die obere mit 22 bezeichnet. Steigrohr 20 und Frischwasserbehälter 19 bilden somit bei der Ausführungsform des Kaffeeautomaten 10 nach der Fig. 1 der Zeichnung eine einstückige Baueinheit. Diese Baueinheit liegt in der Mitte des Gehäuses 11. Um den Frischwasserbehälter 19 herum ist dadurch ein im Querschnitt ringförmiger Aufnahmeraum 43 gebildet, in dem sich das fertige Getränk sammelt.

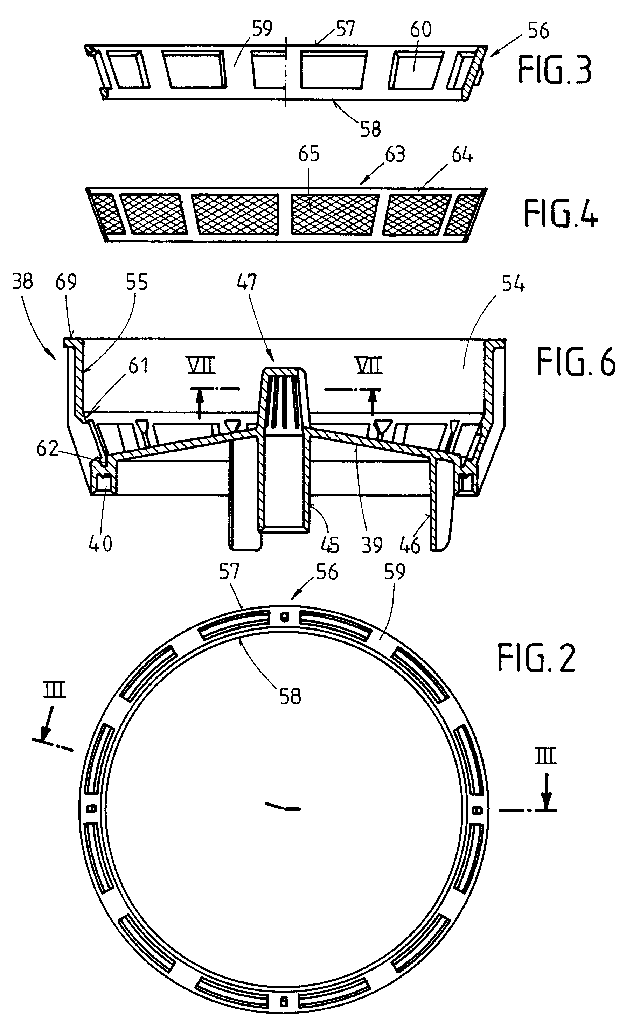

Oberhalb des Frischwasserbehälters 19 ist der generell mit 38 bezeichnete Filterkörper angeordnet, dessen Ausbildung am besten aus der Fig. 6 der Zeichnung ersichtlich ist. Daraus ergibt sich, daß der Filterkörper 38 ein einstückiger Hohlkörper mit kreisförmigem Querschnitt ist, wobei jedoch der untere Bereich als Hohlkegel ausgebildet ist. Der Filterraum des Filterkörpers 38 ist mit 54 bezeichnet, seine Seitenwandungen mit 55. Im oberen kreisförmigen Querschnitt aufweisenden Teil des Filterkörpers sind die Seitenwandungen 55geschlossen. Dagegen befinden sich in dem unteren, hohlkegelförmig gestalteten Bereich des Filterkörpers 48 Austrittsdurchbrüche 42, denen ein gemeinsamer Filter zugeordnet ist, dessen Ausbildung noch angegeben wird.

Auf seiner dem Frischwasserbehälter 19 zugekehrten Seite ist der Filterkörper 38 durch einen Boden 39 verschlossen, der von der Seitenwand 55 in Richtung auf die Mitte stetig ansteigt, wie die Fig. 6 erkennen läßt. In der Mitte des Bodens 39 ist eine nicht näher bezeichnete Öffnung vorhanden. Diese Öffnung steht mit der durchlaufenden Bohrung eines Anschlußrohres 45 in Verbindung, welches in Richtung auf das Steigrohr 20 zeigt. Auf der gegenüberliegenden anderen Seite ist der mittleren Öffnung des Bodens 39 des Filterkörpers 38 eine generell mit 47 bezeichnete Verteilerdüse zugeordnet.

Sowohl Anschlußrohr 45 als auch die Verteilerdüse 47 sind Bestandteil des Filterkörpers 38 und daher mit diesem ein - stückig.

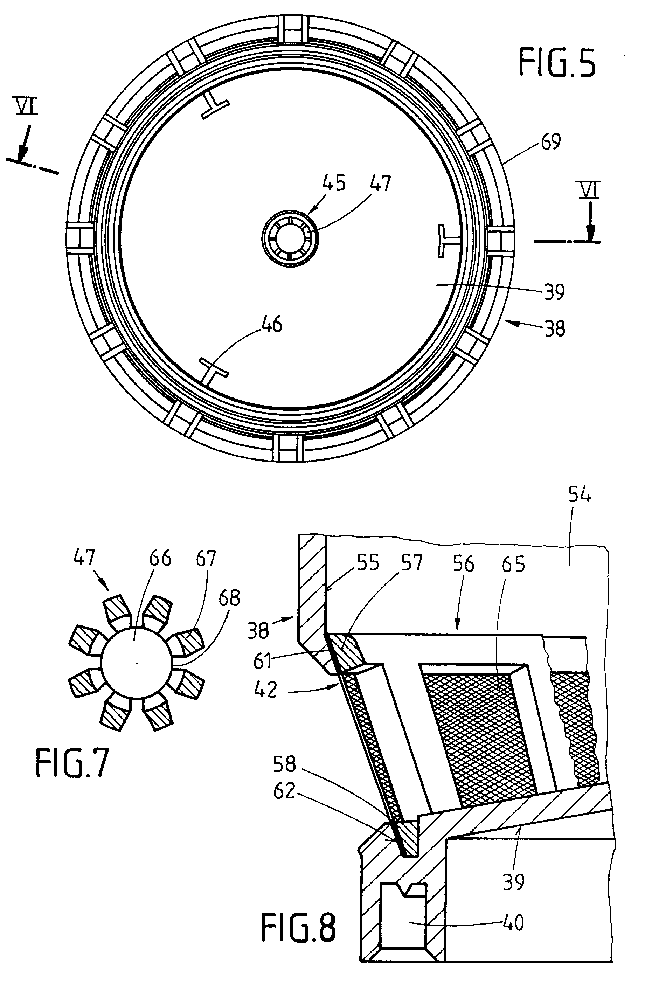

Die Verteilerdüse 47 hat - wie die Fig. 6 und 7 der Zeichnung am besten erkennen lassen - eine obere, quer zur Wasserzufuhrrichtung liegende Begrenzungswand 66. An diese schließen sich Verbindungsstege 67 an, deren andere Enden in den Boden 39 des Filterkörpers 38 übergehen. ZwischenZwei Verbindungsstegen 67 liegt jeweils eine Austrittsöffnung 68. Im gewählten Ausführungsbeispiel sind acht Verbindungsstege 67 und acht Austrittsöffnungen 68 vorhanden, die sämtlich untereinander gleichgestaltet und auf einem Hohlkegelmantel angeordnet sind, dessen den kleinsten Durchmesser aufweisende Öffnung durch die Begrenzungswand 66 verschlossen ist.

In dem nicht näher bezeichneten verdickten Umfangsbereich des Bodens 39 des Filterkörpers 38 ist eine Lageraussparung 40 vorgesehen, in die ein Teilbereich eines Dichtkörpers 41 in der in Fig. 1 ersichtlichen Weise eingebracht ist. Seitlich neben der Verdickung hat der Boden 39 angeformte Zentrier- und Aufstellkörper 46. Von diesen sind insgesamt drei vorhanden, die um 120° zueinander versetzt angeordnet sind, wie dies die Fig. 5 der Zeichnung erkennen läßt. Im Querschnitt gesehen sind die Zentrier- und Aufstellkörper 46 T-förmig ausgebildet.

Beim Anbringen des Filterkörpers 38 auf dem Frischwasserbehälter 19 kommen Außenbereiche der Zentrier- und Aufstellkörper 46 mit der Innenwand des Frischwasserbehälters in Wirkverbindung. Es ist somit ein leichtes zentriertes Aufsetzen des Filterkörpers 38 auf den Frischwasserbehälter 19 möglich.

Wie die Fig. 6 der Zeichnung erkennen läßt, sind die drei Zentrier- und Aufstellkörper 46 länger bemessen als das Anschlußrohr 45. Dies bedeutet, daß beim Absetzen des Filterkörpers 38 bei Nichtgebrauch die vorderen Stirnflächen der Zentrier- und Aufstellkörper auf der Tischfläche ruhen. Da drei solcher Zentrier- und Aufstellkörper vorhanden sind, die über einen Vollkreis verteilt angeordnet sind, ergibt sich somit eine stabile Lage des abgestellten Filterkörpers 38.

Wie schon erwähnt, weist die Seitenwand 55 des Filterraumes 54 des Filterkörpers 38 Austrittsdurchbrüche 42 auf, denen ein gemeinsamer Filter zugeordnet ist. Im gewählten Ausführungsbeispiel ist dieser Filter als Filterring 63 ausgebildet. Er ist in der Fig. 4 der Zeichnung dargestellt. Daraus ergibt sich, daß der Filterring 63 einen Rahmen 64 aus Kunststoff aufweist, der aus einem oberen Ring und einem unteren Ring besteht, die unterschiedlichen Durchmesser aufweisen, derart, daß der mit 64 bezeichnete den größeren Durchmesser aufweist. Die beiden Ringe des Rahmens 64 sind durch Querstege miteinander verbunden. Zwischen diesen Querstegen liegen jeweils nicht näher bezeichnete Fenster, die ihrerseits von einem als Dauerfilter 65 ausgebildeten Filter überdeckt sind. Dieser ebenfalls ringförmige Dauerfilter 65 ist in bekannter Weise hergestellt und mit den Innenseiten des Rahmens 64 verbunden. Auf die Angabe auf Einzelheiten wird daher verzichtet.

Im gewählten Ausführungsbeispiel wird dieser Filterring 63 nicht direkt mit der Seitenwandung 55 des Filterkörpers 38 verbunden, sondern unter Benutzung eines in der Fig. 3 dargestellten Halteringes 56. Bei diesem Haltering 56 handelt es sich im gewählten Ausführungsbeispiel um einen aus Kunststoff bestehenden Körper, der einen oberen Ring 57 und einen unteren Ring 58 aufweist, die unter Freilassung von Fenstern 60 über Verbindungsstege 59 miteinander vereinigt sind. In diesem Falle ist der obere Ring 57 im Durchmesser größer gehalten als der untere Ring 58.

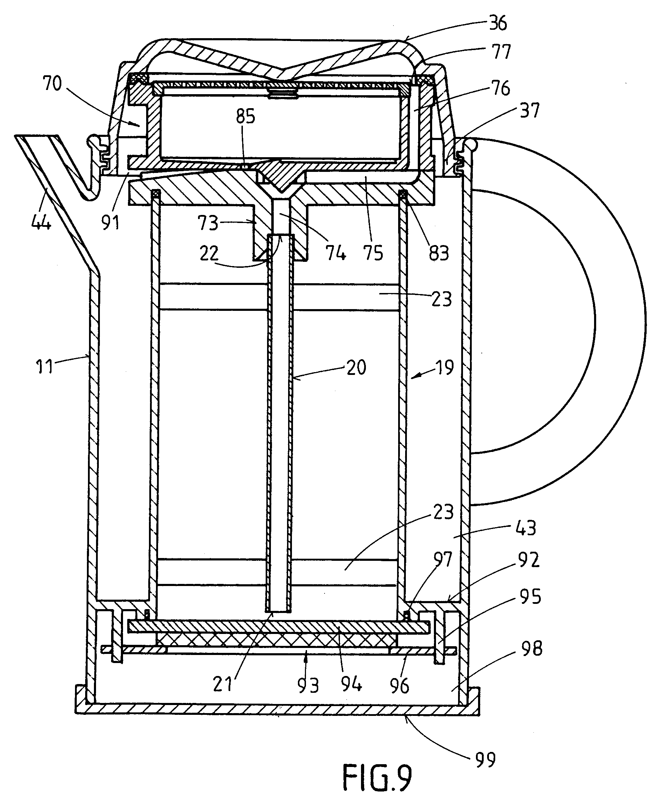

Grundsätzlich wäre es möglich, den Haltering 56 über lösbare Befestigungselemente, z.B. über Rasten und Gegenrasten, mit der Seitenwand 55 des Filterkörpers zu verbinden. Im gewählten Ausführungsbeispiel wird jedoch einer festen Verbindung des Halteringes mit dem Filterkörper 38 der Vorzug gegeben, insbesondere einer Verschweißung der beiden Teile. Gemäß dem Ausführungsbeispiel nach der Fig. 8 der Zeichnung greift der untere Ring 58 des Halteringes 56 in einen Lagerraum 62 des Bodens 39 des Filterkörpers 38 ein. Der Lagerraum 62 für den unteren Ring 58 liegt dabei oberhalb der Lageraussparung 40 für den Dichtkörper 41.

Der obere Ring 57 des Halteringes 56 liegt dagegen mit seiner Außenseite an einer Abstützfläche 61 der Seitenwand 55 des Filterkörpers 38 an. Die Abstützfläche 61 ist dabei nach innen gezogen, also schräggestellt, wie dies die Fig. 6 und 8 der Zeichnung erkennen lassen. Im Bereich der Abstützfläche 61 kann das Verschweißen zwischen dem Filterkörper 38 und dem Haltering 56 erfolgen. Zwischen der Abstützfläche 61 und dem Lagerraum 62 sind die Austrittsdurchbrüche 42 des Filterkörpers 38 angeordnet.

Oberhalb der Abdeckung 36 des Kaffeeautomaten 10 gemäß der Fig. 1 der Zeichnung ist ein generell mit 109 bezeichneter Verteiler angeordnet, der in unterschiedlicher Weise benutzt werden kann. Bei der Ausführungsform des Filterkörpers 38 nach der Fig. 1 der Zeichnung kann ein solcher Verteiler beispielsweise dazu benutzt werden, um das im Filterraum 54 befindliche Kaffeemehl gleichmäßig in diesem Filterraum zu verteilen. Dies geschieht dadurch, daß man mit dem Verteiler 109 eine Drehbewegung im Filterraum ausführt. Dies geschieht von Hand aus. Dabei wird das zunächst unterschiedliche Höhe aufweisende Kaffeemehl gleichmäßig verteilt, derart, daß es im gesamten Filterraum 54 gleich hoch ist.

Man kann aber auch in Abwandlung des Filterkörpers 38 nach der Fig. 1 der Zeichnung die Verteilerdüse 47 entfernen, dabei jedoch den Zufluß des erhitzten Wassers -wie bisher- von unten her erfolgen lassen. In diesem Fall wird der Verteiler 109 unmittelbar auf dem im Filterraum 54 angeordneten Kaffeemehl gelagert. Dadurch nimmt der Verteiler 109 innerhalb des Filterraumes 54 unterschiedliche Höhen ein und zwar in Abhängigkeit von der Menge des in den Filterraum eingebrachten Kaffeemehls. Die Zufuhr des erhitzten Wassers erfolgt von der Unterseite des Verteilers 109 her. Das vom Steigrohr kommende Wasser wird direkt der Unterseite des Verteilers 109 zugeführt und von dort aus gleichmäßig über das im Filterraum 54 befindliche Kaffeemehl verteilt.

Im dargestellten Ausführungsbeispiel nach der Fig. 1 der Zeichnung ist der Verteiler 109 als Scheibe ausgebildet, die drehbar auf dem Kaffeemehl gelagert werden kann und zwar in Abwandlung des Filterkörpers 38 des Gerätes nach der Fig. 1 der Zeichnung. Durch Verdrehen der Scheibe 109 wird ein leichtes Verteilen des z.B. vorher angehäuften Kaffeemehls im Filterraum durchgeführt, so daß im Endzustand das Kaffeemehl im Filterraum überall gleich hoch steht.

Der Verteiler 109 hat einen ebenen Grundkörper 110, auf dessen Außenseite ein mittiger Vorsprung 111 angebracht ist. Auf der gegenüberliegenden anderen Seite des ebenen Grundkörpers 110 sind Leit- und/oder Verteilerrippen 113 angebracht, die im dargestellten Ausführungsbeispiel rippenförmig gestaltet sind. Der ebene Grundkörper 110 hat an seiner Umfangsfläche einen umlaufenden Flansch 112. Dieser wirkt mit der Innenseite der Seitenwand 55 des Filterkörpers 38 zusammen, so daß eine gute Führung beim Benutzen des Verteilers 109 vorhanden ist. Der mittige hohle Vorsprung 111 dient als Handh-abe. Diese wird nicht nur beim Einsetzen des Verteilers 109 in den Filterraum benutzt sondern auch dann, wenn der Verteiler 109 verdreht werden soll, um das Kaffeemehl auf eine gleichbleibende Höhe im Filterraum zu bringen.

Gemäß der Ausführungsform des Kaffeeautomaten 10 nach der Fig. 1 der Zeichnung steckt in dem Hohlraum des Anschlußrohres 45 das eine Ende eines Verbindungsrohres 48, dessen anderes Ende in der Bohrung des Steigrohres 20 untergebracht ist. Oberhalb des Endes des Steigrohres 20 ist im Verbindungsrohr 48 eine Öffnung 49 vorgesehen. Diese mündet in den Frischwasserbehälter 19. Durch eine solche Öffnung soll ein Weiterleiten von noch nicht erhitztem Wasser zum Kaffeemehl verhindert werden. Durch die Öffnung 49 des Verbindungsrohres 48 gelangt ein Teil des unter Druck stehenden Dampfes beim bestimmungsgemäßen Gebrauch des Kaffeeautomaten in den Frischwasserbehälter 19 zurück.

Der obere Rand des Filtergerätes 38 ist verbreitert und dient als Auflage für einen Dichtring 51, die bereichsweise in eine nicht näher bezeichnete Ausnehmung eingreift, die an der Innenseite eines Deckels bzw. einer Abdeckung 36 angeordnet ist. Die Abdeckung 36 ist mit dem Gehäuse 11 des Kaffeeautomaten 10 verspannbar. Im gewählten Ausführungsbeispiel ist der Befestigungsteil 37 der Abdeckung 36 als Verschraubung ausgebildet, die mit einer Gegenverschraubung des Gehäuses 11 lösbar verbunden werden kann. Durch Festschrauben der Abdeckung 36 werden die Dichtungen 51 bzw. 41 zusammengepreßt und kommen dann einerseits mit dem Filterkörper 38 und andererseits mit dem Frischwasserbehälter 19 in Wirkverbindung.

Wie die Fig. 1 der Zeichnung erkennen läßt, ist auch nach dem Anbringen der Abdeckung 36 am Gehäuse 11 die Verbindung einer Schnaupe 44 mit dem Aufnahmeraum 43 des Gehäuses 11 vorhanden, so daß auch bei aufgebrachter Abdeckung 36 ein Ausgießen des fertigen Kaffees aus dem Aufnahmeraum 43 über die Schnaupe 44 erfolgen kann.

Sowohl der Frischwasserbehälter 19 als auch der Aufnahmeraum 43 müssen im unteren Bereich der Fig. 1 abgedichtet werden. Dies geschieht in folgender Weise:

Wie die Fig. 1 der Zeichnungen erkennen läßt, greift das dem Filterkörper 38 abgekehrte Ende (24) des Frischwasserbehälters 19 in eine Dichtung 25 ein, die ihrerseits auf einen Verbinder 26 einwirkt, der mittels einer Spannschraube 34 an einer Bodenplatte 32 des Gehäuses 11 festgelegt werden kann. Bei dem Verbinder 26 handelt es sich im gewählten Ausführungsbeispiel um einen einstückigen, durchmessermäßig mehrfach abgesetzten Körper aus einem gut wärmeleitendem Werkstoff, vorzugsweise aus einem Metall. Der Verbinder 26 hat einen ebenen, der unteren Öffnung 21 des Steigrohres 20 benachbarten kreisförmigen Bereich, an dessen Außenseite sich ein mittlerer Ansatz 33 zum Eingriff des Schaftes der Spannschraube 34 befindet. Der ebene Teil des Verbinders 26 geht in einen etwa rechtwinklig dazu liegenden Mittelbereich 27 über, an den sich ein nach außen weisender, ringförmiger Endbereich 28 anschließt. Das abgewinkelte Ende 29 des Endbereiches 28 belastet einen Dichtungsring 30 in Richtung auf eine Auflage 31 des Gehäuses 11. Bei dieser Auflage 31 handelt es sich um einen umlaufenden, nach innen weisenden Flansch, der bei der Herstellung dieses Gehäuses 11 diesem unmittelbar angeformt ist. Die Dichtung 25 liegt einerseits an der etwa senkrecht stehenden Außenwand des Mittelteiles 27 des Verbinders und andererseits an der horizontal liegenden Oberfläche des Endbereiches 28 an. Auf diese Weise wird nicht nur eine große Dichtfläche erzielt sondern auch eine gute Sicherung gegen Lageveränderung. Der untere Innenbereich des Frischwasserbehälters 19 hat mehrere Vorsprünge und Vertiefungen, die nach dem Anbringen der Dichtung 25 in dieser liegen.

Die mit der Spannschraube 34 zusammenwirkende Bodenplatte 32 liegt in einem vertieften Bereich (35). Sie kommt teilweise auch mit der Außenfläche des Ergänzungsteiles 16 in Wirkverbindung, so daß dieses durch die Bodenplatte 32 einen zusätzlichen Halt am Gehäuse 11 erhält.

Die zum Erhitzen des Wassers im Frischwasserbehälter 19 erforderliche Heizung 52 liegt unterhalb des ebenen Bereiches des Verbinders 26 und umgreift dessen mittleren Ansatz 33. Im Ausführungsbeispiel nach der Fig. 1 der Zeichnung ist die Heizung 52 als elektrische Widerstandsheizung bekannter Bauart ausgebildet.

Die Wirkungsweise des Kaffeeautomaten nach der Fig. 1 der Zeichnung ist wie folgt:
Ausgehend von der Lage der Einzelteile gemäß der Fig. 1 wird die Abdeckung 36 vom Gehäuse 11 entfernt und danach der Filterkörper 38 herausgenommen. Dadurch ist die obere Öffnung des Frischwasserbehälters 19 frei. Dieser kann in der gewünschten Menge mit Frischwasser beschickt werden.

In den Filterraum 54 des Filterkörpers wird dann Kaffeemehl in der gewünschten Menge eingegeben. Dieses kann mit einem Verteiler, beispielsweise mit dem Verteiler 109, gl-eichmäßig in dem Filterraum 54 verteilt werden, was durch einfaches Drehen des Verteilers 109 im Filterraum 54 erfolgt. Es erfolgt dann das Aufstecken des Filterkörpers 38 auf das vorragende freie Ende des Verteilerrohres 48. Bei diesem Aufstecken des Filterkörpers kommen die Zentrier- und Aufstellkörper 46 mit der Innenwand des Frischwasserbehälters 19 in Wirkverbindung. Am Ende der Aufsteckbewegung hat der Filterkörper 38 die in der Fig. 1 dargestellte Lage im Bezug auf den Frischwasserbehälter 19 und das Gehäuse 11. Es kann dann die Abdeckung 36 auf das Gehäuse aufgeschraubt werden. Dabei kommt der Befestigungsteil 37 der Abdeckung 36 mit dem Gegengewinde des Gehäuses 11 in Wirkverbindung. Nach Beendigung der Arbeiten ist eine druckdichte Verbindung des Filterkörpers 38 mit dem Frischwasserbehälter 19 und der Abdeckung 36 erzielt. Es kann nunmehr die Heizung 52 mittels eines Schalters eingeschaltet werden. Diese gibt über den Verbinder 26 ihre Wärme an das im Frischwasserbehälter 19 befindliche Wasser ab. Mit zunehmender Temperatur des Wassers im Frischwasserbehälter 19 entsteht oberhalb des Wasserspiegels Dampf. Mit zunehmender Erwärmung wird der Dampfdruck immer größer mit dem Erfolg, daß durch die untere Öffnung 21 des Steigrohres 20 Wasser im Steigrohr nach oben getrieben wird. Bei der Kaffeeherstellung kann dabei ein Teil des gespannten Dampfes durch die Öffnung 49 des Verbindungsrohres 48 zurück in den Frischwasserbehälter 19 gelangen. Das erhitzte Wasser tritt in das Anschlußrohr 45 ein, gelangt von dort in die Verteilerdüse 47 und wird durch dessen Austrittsöffnungen 68 auf das Kaffeemehl im Filterraum 54 befördert. Es sei an dieser Stelle bemerkt, daß im gewählten Ausführungsbeispiel die Höhe der Verteilerdüse 47 so gewählt ist, daß sie mindestens teilweise aus dem im Filterraum befindlichen Kaffee herausragt.

Das Kaffeemehl wird von dem erhitzten Wasser durchsetzt, durchläuft den Dauerfilter 65 und gelangt in den Bereich der Austrittsdurchbrüche 42 in der Seitenwand 55 des Filterkörpers 38. Von dort aus fließt der fertige Kaffee in den Aufnahmeraum 43. Dort wird der Kaffee gesammelt. Das Durchtreiben des erhitzten Wassers durch das Kaffeemehl geschieht sehr schnell, weil ein beachtlich hoher Druck im Filterkörper 38 des Kaffeeautomaten vorhanden ist. Die Gefahr des Überlaufens ist einer solchen Ausgestaltung des Kaffeeautomaten 10 nicht gegeben, weil die ablaufende Menge des fertigen Kaffees groß ist.

Das fertige Getränk kann dann entweder sofort über die Schnaupe 44 in eine Tasse od.dgl. gegossen werden oder man kann den Kaffee auch eine Zeit lang in dem Aufnahmeraum 43 aufbewahren. Um etwa auftretende Wärmeverluste auszugleichen, ist es zweckmäßig, im letztgenannten Falle einen Teil der Heizung in Betrieb zu lassen. Hierfür können an sich bekannte Schaltungen benutzt werden oder man verwendet eine Zusatzheizung von geringer Leistung.

In der Fig. 9 der Zeichnung ist eine zweite Ausführungsform eines Kaffeeautomaten dargestellt. Soweit die Teile des Kaffeeautomaten 10 gegenüber dem ersten Ausführungsbeispiel unverändert geblieben sind, wurden die Bezugszeichen übernommen. Bei der Ausführungsform des Kaffeeautomaten 10 nach der Fig. 9 der Zeichnung sind das Gehäuse 11, der Frischwasserbehälter 19, das Steigrohr 20 und die Halterippen 23 zu einer einstückigen Baueinheit zusammengefügt, der der jetzt mit 70 bezeichnete Filterkörper druckdicht unter Benutzung eines Deckels 36 abnehmbar zugeordnet ist. Eine solche Baueinheit läßt sich in wirtschaftlicher Weise fertigen. Dabei können die in der einschlägigen Industrie gebräuchlichen Kunststoffe eingesetzt werden. Eine solche Baueinheit hat an ihrer dem Deckel 36 abgekehrten Seite einen Unterbringungsraum 98 für eine Heizung 93 sowie für nicht näher dargestellte Schalt- und Steuereinrichtungen. Nach unten hin ist der Unterbringungsraum 98 durch einen abnehmbaren Bodenteil 99 verschließbar. Dieser umgreift mit seinem abgewinkelten Rand das untere Ende der Baueinheit.

Auf der Unterseite des Bodens 92, der ebenfalls Bestandteil der Baueinheit ist, wird eine Verlängerung 95 angeformt, die in Richtung des Unterbringungsraumes 98 weist. Die Verlängerung 95 wird zur Lagerung eines Abstütz- und Haltegliedes 96 benutzt, welches parallel und im Abstand zum Bodenteil 99 verläuft. Auf der Begrenzungskante einer nicht näher bezeichneten mittleren Öffnung des Abstütz- und Haltegliedes 96 ruht eine als Dickschichtheizung 93 ausgebildete Heizung, die mit den nicht dargestellten Schalt- und Steuereinrichtungen des Unterbringungsraumes 98 zusammenwirkt. Die Dickschichtheizung ist grundsätzlich bekannt, so daß auf die Angabe von Einzelheiten verzichtet wird. Oberhalb de Dickschichtheizung 93 ist eine Glaskeramikplatte, z.B. eine Platte angebracht, die aus einem Werkstoff besteht, der unter dem Warenzeichen "Ceran" bekannt ist. Diese Glaskeramikplatte 94 ist gegenüber dem Frischwasserbehälter 19 abgedichtet. Dies geschieht unter Verwendung einer Dichtung 97.

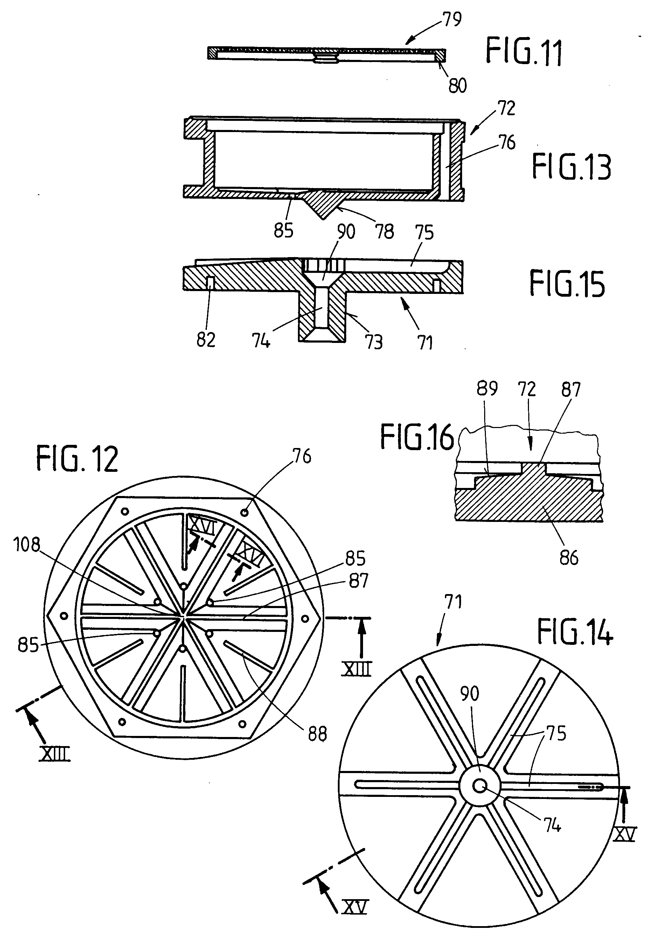

Der jetzt mit 70 bezeichnete Filterkörper für den Kaffeeautomaten 10 nach der Fig. 9 der Zeichnung ist in den Fig. 11 bis 16 wiedergegeben. Daraus ergibt sich, daß in diesem Falle der Filterkörper 70 aus einem Unterteil 71 und einem Oberteil 72 besteht, die zu einer Baueinheit vereinigt sind. Sowohl der Unterteil 71 als auch der Oberteil 72 sind jeweils einstückig aus einem Werkstoff, insbesondere aus einem Kunststoff hergestellt. Sie werden nach der Herstellung durch grundsätzlich bekannte Verbindungsmittel zu einer Baueinheit vereinigt.

Dabei wird einem Verschweißen von Unterteil 71 und Oberteil 72 der Vorzug gegeben.

Der Unterteil 71 ist dabei als in Draufsicht gesehen scheibenartiger Körper ausgebildet, der auf seiner dem Oberteil 72 zugekehrten Seite mit einer Mehrzahl von Querkanälen 75 versehen ist, die auf ihrem dem Umfang zugekehrten Ende geschlossen sind, während das gegenüberliegende andere Ende in eine Erweiterung 90 einmündet. Die sternförmige Anordnung der Querkanäle 75 ist in der Fig. 14 erkennbar. Auf seiner dem Frischwasserbehälter zugekehrten Seite hat der Unterteil 71 in seiner Mitte liegend einen Verbindungsstutzen 73 mit einer durchlaufenden Bohrung 74. Das untere Ende der Bohrung 74 ist dabei so erweitert, daß das obere Ende des Steigrohres 20 mit seiner Austrittsöffnung untergebracht werden kann, so wie dies in der Fig. 9 der Zeichnung dargestellt ist. In diesem Falle wird somit auf ein besonderes Verbindungsrohr zwischen dem Verbindungsstutzen 73 und dem Steigrohr 20 verzichtet. Die Bohrung 74 geht auf ihrer dem Oberteil 72 zugekehrten Seite in die schon erwähnte Erweiterung 90 über. Von dieser Erweiterung gehen dann die Querkanäle 75 aus. In die Erweiterung 90 ragt eine Verteilerfläche 78 des Bodens des Oberteiles 72 hinein, wobei diese Verteilerfläche kegelförmig gestaltet ist, wobei die Spitze des Kegels in Richtung der Bohrung 74 des Verbindungsstutzens 73 zeigt. An der Unterseite hat der Unterteil 71 noch Lageraussparungen 82, in die wiederum eine Dichtung 83 eingreift. Diese wirkt in der in Fig. 9 dargestellten Weise mit der Stirnfläche des Frischwasserbehälters 19 zusammen.

Der Oberteil 72 des Filterkörpers 70 ist aus den Fig. 12 und 13 der Zeichnung ersichtlich. Daraus folgt, daß der Oberteil 72 in Draufsicht gesehen etwa kreisförmige Gestalt aufweist. Dies gilt vor allem für die Begrenzungswand des Filterraumes und für die äußere Umfangsfläche. Diese beiden Teile haben unterschiedliche Durchmesser, wie die Fig. 12 der Zeichnung erkennen läßt. In dem Bereich zwischen den beiden Durchmessern liegen nicht näher bezeichnete Verdickungen, in denen jeweils ein Längskanal 76 angeordnet ist, dessen unteres Ende mit dem äußeren Ende des Längskanales 75 in Verbindung steht. Das gegenüberliegende andere Ende jedes Längskanales 76 ist mit einer Austrittsöffnung 77 versehen, die in Höhe eines Verteilersiebes 79 liegen. Das über das Steigrohr und die Querkanäle 75 und die Längskanäle 76 zugeführte erhitzte Wasser gelangt daher durch die Austrittsöffnungen 77 auf die Oberseite des Verteilersiebes 79. Von dort tropft es auf das im Filterraum liegende Kaffeemehl. Das Verteilersieb 79 hat dabei eine Lagerfläche 80, die in der in Fig. 9 ersichtlichen Weise mit der Stirnfläche der Begrenzungswandungen des Filterraumes zusammenwirkt.

Wie schon erwähnt, sind die Längsbohrungen 76 in der Nähe der Umfangsfläche des Oberteils 72 angeordnet. Sie liegen auf einem Kreis mit dem Mittelpunkt 108. Der Mittelpunkt dieses Kreises fällt mit demjenigen des im Querschnitt kreisförmigen Oberteils 72 zusammen.

Aus der Fig. 12 der Zeichnung ist ferner ersichtlich, daß im Boden des Oberteils 72 Abflußbohrungen 85 vorhanden sind. Diese liegen auf einem Kreis um den Mittelpunkt 108 herum. Der Durchmesser dieses Kreises ist jedoch um ein Mehrfaches kleiner als der Durchmesser desjenigen Kreises, auf dem die Längskanäle 76 liegen.

Vom Mittelpunkt 108 des Oberteils 72 des Filterkörpers 70 gehen sternförmig Rippen 87 aus, die bis zu den Begrenzungswandungen des Filterraumes durchlaufen. Von diesen Begrenzungswandungen des Filterraumes gehen kurz Rippen 88 aus, die jeweils in der Mitte zwischen zwei langen Rippen 87 liegen; zum Mittelpunkt 108 des Oberteiles 72 des Filterkörpers 70 gerichtet sind und jeweils mit Abstand von einer Abflußbohrung 85 enden (vergl. Fig. 12).

Aus der Fig. 16 ist erkennbar, daß zu beiden Seiten jeder langen Rippe 87 Schrägflächen 89 angeordnet sind. Die Oberseiten der Rippen 87 und 88 dient einem Filter, insbesondere einem wegwerfbaren Papierfilter als Auflagefläche. Dies bedeutet, daß bei der Ausführungsform des Filterkörpers nach den Fig. 11 bis 16 kein Dauerfilter sondern ein Wegwerffilter benutzt wird. Von den Abflußbohrungen 85 gelangt das fertige Getränk in einen Auslauf 91, der zwischen der Oberseite des Unterteils 71 und der Unterseite des Oberteils 72 des Filterkörpers vorhanden ist. Dieser Auslauf mündet in den Aufnahmeraum 43 ein. Dies bedeutet, daß das fertige Getränk sich im Aufnahmeraum 43 sammeln kann.

Der Deckel 36 des Kaffeeautomaten 10 wird wiederum mit einer nicht näher bezeichneten Gegenverschraubung an der Innenseite des Gehäuses verschraubt. Zu diesem Zweck hat der Deckel 36 wiederum einen als Schraubteil ausgebildeten Befestigungsteil 37. Im Gegensatz zu der Ausfüh-rungsform nach der Fig. 1 hat der Deckel 36 gemäß der Fig. 9 einen in Richtung des Verteilersiebes 79 heruntergezogenen Mittelbereich.

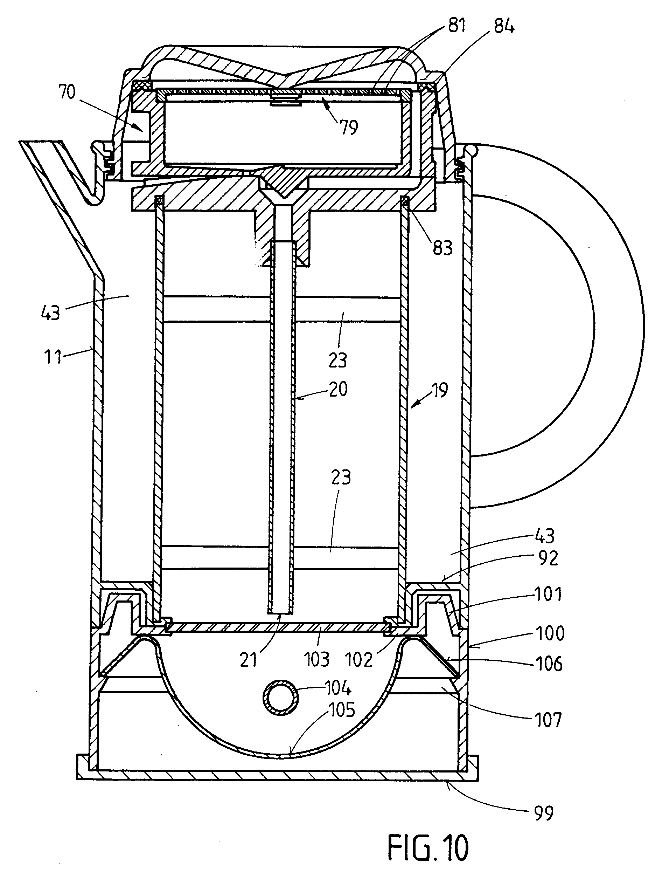

Bei der Ausführungsform des Kaffeeautomaten 10 nach der Fig. 10 der Zeichnung hat der Filterkörper 70 die Ausbildung gemäß den Fig. 11 bis 16. Die Bezugszeichen aus diesen Figuren sind somit übernommen. In Abwandlung des Kaffeeautomaten 10 nach der Fig. 9 hat die Ausführungsform nach der Fig. 10 einen für sich hergestellten, als Hohlzylinder ausgebildeten Frischwasserbehälter 19, der jedoch seinerseits mit dem Steigrohr 20 und den Halterippen 23 einstückig gehalten ist. Der untere Bereich des hohlzylindrischen Frischwasserbehälters 29 greift in eine Versenkung, die seitlich neben dem Boden 92 des Aufnahmeraumes 43 vorhanden ist. Dort sind nicht näher bezeichnete Dichtmittel vorgesehen.

Das Gehäuse 11 des Kaffeeautomaten 10 nach der Fig. 10 der Zeichnung hat einen generell mit 100 bezeichneten Unterteil, der an seiner dem Frischwasserbehälter 19 zugekehrten Seite eine Öffnung aufweist, die durch einen Wärmespeicher, wie eine Glaskeramikplatte 103, verschlossen ist. Diese Glaskeramikplatte liegt mit ihrem Randbereich auf einem Lagerende 102 eines abgeflanschten Bereiches 101 des Unterteiles 100 auf. Bei der Glaskeramikplatte 103 kann es sich um eine solche handeln, die aus dem unter dem Warenzeichen "Ceran" bekannten Werkstoff gefertigt ist.

In dem Hohlraum des Unterteiles 100 ist im Ausführungsbeispiel nach der Fig. 10 eine Heizung angeordnet, die aus wenigstens einer Halogenlampe 104 besteht. Bei dieser Halogenlampe 104 kann es sich um eine handelsübliche handeln, die in ebenfalls bekannter Weise in Fassungen ruht, die in der Zeichnung der Einfachheit halber weggelassen sind. Im gewählten Ausführungsbeispiel ist nur eine einzige Halogenlampe 104 vorgesehen, die im Brennpunkt eines etwa halbkreisförmigen Reflektors 105 angeordnet ist. Dieser Reflektor 105 ist dabei so gestaltet, daß die von der Halogenlampe ausgehenden Strahlen von dem Reflektor 105 in Richtung auf die Glaskeramikplatte 103 zurückgeworfen wird, diese durchdringen und das im Frischwasserbehälter 19 befindliche Wasser in bekannter Weise aufheizen. Zur Lagerung des Reflektors 105 im Unterteil 100 sind seine Enden bei 106 zurückgebogen., Das vordere freie Ende des zurückgebogenen Teiles 106 ruht dabei auf auf einem Stützflansch 107, der der Innenwand des Unterteiles 100 direkt angeformt ist. Der Stützflansch 107 ist dabei umlaufend.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. So könnte beispielsweise anstelle der in den Figuren der Zeichnung wiedergegebenen Schraubverbindung zwischen dem Deckel 36 und dem Gehäuse 11 Spannklammern, Spannfedern oder ähnliche druckerzeugende Verbindungselemente eingesetzt werden. Auch im Falle der Ausführungsform nach Fig. 1 der Zeichnung kann auf ein zusätzliches Verbindungsrohr 48 zwischen dem Steigrohr und dem Filterkörper 38 verzichtet werden. In diesem Falle müßte das obere Ende des Steigrohres 20 so hochgezogen werden, daß es in die Bohrung des Anschlußrohres 45 paßt. Der Frischwasserbehälter 19 nach den Ausführungsformen gemäß der Fig. 1 und 10 der Zeichnung kann auch als Hohlkegel gestaltet werden. Die den Frischwasserbehälter 19 mit dem Steigrohr 20 verbindenden Halterippen können hinsichtlich ihrer Anzahl und ihrer Länge abweichend von den dargestellten Ausführungsbeispielen gewählt werden. Der Verteiler 109 kann auch eine glatte Scheibe sein, die mit ihrer Umfangsfläche mit den Innenwandungen der Seitenwand 55 des Filterkörpers 38 zusammenwirkt. In diesem Falle kommen die Leit- und Verteilerrippen 113 in Fortfall.

In den dargestellten Ausführungsformen der jeweiligen Heizung des Kaffeeautomaten 10 ist immer nur eine einzige Heizung angegeben. Abweichend hiervon kann die Heizung auch aus zwei Heizelementen bestehen. Von diesen beiden Heizelementen ist das eine die Haupt- und das andere die Nebenheizung. Diese beiden Heizelemente lassen sich derart betreiben, daß sie zunächst gemeinsam für das Erhitzen des Wassers sorgen. Sobald jedoch ein Großteil des Wassers an den Frischwasserbehälter abgeleitet ist, wird dann die Hauptheizung abgeschaltet und nur noch die Restheizung betrieben. Die geringe Leistung der Nebenheizung ist ausreichend für den Abtransport des Restwassers. Das Ab- bzw. Umschalten kann dann dabei durch bekannte Schaltungen bzw. Schalteinrichtungen erfolgen. Für Warmhaltezwecke des fertigen Kaffees läßt sich entweder die Nebenheizung oder aber eine zusätzliche Warmhalteheizung benutzen, deren Betrieb automatisch erfolgen kann.

Und schließlich hat die erfindungsgemäße Ausbildung des Kaffeeautomaten auch den Vorteil, daß er bei Bedarf als Heißwasserzubereitungsgerät verwendet werden kann. Dies kann beispielsweise so verwirklicht werden, daß man bei der Ausführungsform nach der Fig. der Zeichnung den Frischwasserbehälter 19 und den Filterkörper 38 aus dem Gehäuse 11 entfernt. In den dann vorhandenen großen Aufnahmeraum des Gehäuses kann bei abgenommenem Deckel 36 Wasser eingefüllt werden, das dann mittels der Heizung 52 leicht erwärmt werden kann. Somit steht dem Benutzer mit dem erfindungsgemäßen Gerät ein Mehrzweckgerät zur Verfügung.

## Patentansprüche

1. Elektrisch betriebenes Gerät zum Zubereiten von Aufgußgetränken, wie Kaffee, Tee od. dgl., insbesondere Kaffeeautomat (10) mit einem Gehäuse (11) in Kannenform, dessen Innenraum durch wenigstens eine Trennwand in einen Frischwasserbehälter (19) und in einen mit einer Ausgießöffnung (44) versehenen Aufnahmeraum (43) für das fertige Getränk unterteilt ist, wobei in dem Frischwasserbehälter (19) ein Steigrohr (20) angeordnet ist, durch welches das mittels einer Heizung erhitzte Wasser einem das Kaffeemehl od.dgl. aufnehmenden, mit einer Abdeckung (36) versehenen Filter (38) zuführbar ist, durch dessen Auslaß das fertige Getränk in den Aufnahmeraum (43) abfließt, wobei einerseits der Filterkörper (38 bzw. 70) zwischen dem Frischwasserbehälter (19) und der Abdeckung (36) des Kaffeeautomaten (10) druckdicht angeordnet ist, und andererseits dem Filterkörper (38 bzw. 70) das erhitzte Wasser über das Kaffeemehl verteilende Einrichtungen (47 bzw. 79) zugeordnet sind, und bei der dem Filterkörper (38) des Kaffeeautomaten (10) das erhitzte Wasser durch eine Öffnung seines Bodens (39) von unten zuführbar ist, und die Verteilereinrichtung des Filterkörpers als Verteilerdüse ausgebildet ist,
**dadurch gekennzeichnet,**
daß der Boden (39) des Filterkörpers (38) ein mit dem Steigrohr (20) verbindbares Anschlußrohr (45) aufweist, das mit der in den Filterraum (54) ragenden Verteilerdüse (47) in Verbindung steht.

2. Gerät nach Anspruch 1, dadurch gekennzeichnet, daß die Verteilerdüse (47) eine obere, quer zur Wasserzufuhreinrichtung liegende Begrenzungswand (66) aufweist, an die sich Verbindungsstege (67) anschließen, deren andere Enden in dem Boden (39) des Filterkörpers (38) übergehen, und die Austrittsöffnungen (68) zwischen sich einschließen.

3. Gerät nach Anspruch 2, dadurch gekennzeichnet, daß die Verbindungsstege (67) und die Austrittsöffnungen (68) der Verteilerdüse (47) jeweils untereinander gleichgestaltet sind und auf einem Hohlkegelmantel liegen, dessen den kleinsten Durchmesser aufweisende Öffnung durch die Begrenzungswand (66) verschlossen ist.

4. Gerät nach einem oder mehreren der vorangehenden Ansprüche, dadurch gekennzeichnet, daß die Seitenwand (55) des Filterraumes (54) des Filterkörpers (38) Austrittsdurchbrüche (42) aufweist, denen ein gemeinsamer Filter, vorzugsweise ein Dauerfilter, zugeordnet ist.

5. Gerät nach Anspruch 4, dadurch gekennzeichnet, daß der Filter als Filterring (63) ausgebildet ist, der aus einem Rahmen (64) besteht, an dem unter Freilassung von Fenstern ein Dauerfilter (65) befestigt ist.

6. Gerät nach Anspruch 4 und 5, dadurch gekennzeichnet, daß der Filterring (63) mittels eines Halteringes (56) an der Seitenwand (55) des Filterkörpers (38) festgelegt ist.

7. Gerät nach Anspruch 6, dadurch gekennzeichnet, daß der Haltering (56) aus einem oberen Ring (57) und einem unteren Ring (58) besteht, die unter Freilassung von Fenstern (60) über Verbindungsstege (59) miteinander vereinigt sind.

8. Gerät nach Anspruch 6 und 7, dadurch gekennzeichnet, daß der untere Ring (58) des Halteringes (56) in einen Lagerraum (62) des Bodens (39) des Filterkörpers (38) eingreift, während der obere Ring (57) mit seiner Außenseite an einer Abstützfläche (61) der Seitenwand (55) des Filterkörpers (38) anliegt, wobei die Austrittsdurchbrüche (42) zwischen der Abstützfläche (61) und der Oberkante des Lagerraumes (62) liegen.

9. Gerät nach den Ansprüchen 6 bis 8, dadurch gekennzeichnet, daß der Haltering (56) mit der Seitenwand (55) des Filterkörpers (38) fest verbunden, vorzugsweise verschweißt ist.

10. Gerät nach Anspruch 1, dadurch gekennzeichnet, daß der druckdicht zwischen dem Frischwasserbehälter (19) und der Abdeckung (36) angeordnete Filterkörper (70) aus einem Unterteil (71) und einem Oberteil (72) besteht, die zu einer Baueinheit vereinigt sind, welche Zuleitungskanäle (75 bzw. 76) für das erhitzte Wasser aufweist und mit einem Verteilersieb (79) ausgerüstet ist, welches oberhalb des Kaffeemehls lagert, das seinerseits auf einen Filter, insbesondere Papierfilter, angeordnet ist, unter dem sich Abflußbohrungen (85) befinden, denen ein in den Aufnahmeraum (43) des Kaffeeautomaten (10) einmündender Auslauf (91) nachgeschaltet ist.

11. Gerät nach Anspruch 10, dadurch gekennzeichnet, daß der Unterteil (71) des Filterkörpers (70) einen Verbindungsstutzen (73) zum Steigrohr (20) aufweist, der mit einer Bohrung (74) versehen ist, die in einer Erweiterung (90) übergeht, von der Querkanäle (75) ausgehen, die mit Längskanälen (76) in Verbindung stehen, an deren Enden sich eine Austrittsöffnung (77) befindet, welcher das Verteilersieb (79) nachgeschaltet ist.

12. Gerät nach Anspruch 11, dadurch gekennzeichnet, daß in die Erweiterung (90) des Filterkörpers (70) eine vorzugsweise kegelige Verteilerfläche hineinragt, deren Spitze der Bohrung (74) des Verbindungsstutzens (73) zugekehrt ist.

13. Gerät nach Anspruch 10 - 12, dadurch gekennzeichnet, daß das Filtersieb (79) mittels einer Lagerfläche (80) auf der Stirnfläche des Oberteils (12) des Filterkörpers (70) ruht.

14. Gerät nach Anspruch 10, dadurch gekennzeichnet, daß das verteilersieb (79) unmittelbar auf dem im Filterraum des Filterkörpers (70) befindlichen Kaffeemehl lagert.

15. Gerät nach Anspruch (10 u. 11), dadurch gekennzeichnet, daß die Querkanäle (75) sternförmig von der Erweiterung (90) des Unterteils (71) des Filterkörpers (79) ausgehen, währen die Längsbohrungen (76) in der Nähe der Umfangsfläche des Oberteils (72) angeordnet sind und auf einem Kreis liegen, dessen Mittelpunkt (108) mit demjenigen des im Querschnitt kreisförmigen Oberteils zusammenfällt.

16. Gerät nach Anspruch 15, dadurch gekennzeichnet, daß die Abflußbohrungen (85) im Oberteil (72) des Filterkörpers (70) ebenfalls auf einem Kreis liegen, dessen Durchmesser jedoch um ein mehrfaches kleiner ist, als der Durchmesser des Kreises, auf dem die Längskanäle liegen.

17. Gerät nach Anspruch 15 und 16, dadurch gekennzeichnet, daß vom Mittelpunkt (108) des Oberteils (72) des Filterkörpers (70) sternförmig Rippen (87) ausgehen, die bis zu den Begrenzungswandungen des Filterraumes durchlaufen.

18. Gerät nach Anspruch 17, dadurch gekennzeichnet, daß von den Begrenzungswandungen des Filterraumes kurze Rippen (88) ausgehen, die jeweils in der Mitte zwischen zwei langen Rippen (87) liegen, zum Mittelpunkt (108) des Oberteils (72) des Filterkörpers (70) gerichtet sind und jeweils mit Abstand von einer Abschlußbohrung (85) enden.

19. Gerät nach Anspruch 17 und 18, dadurch gekennzeichnet, daß zu beiden Seiten jeder langen Reihe (87) Schrägflächen (89) angeordnet sind.

20. Gerät nach Anspruch 1, dadurch gekennzeichnet, daß das Steigrohr Halterippen (23) aufweist und daß das Gehäuse (11), der Frischwasserbehälter (19), das Steigrohr (20) und die Halterippen (23) zu einer einstückigen Baueinheit zusammengefaßt sind, der der Filterkörper (70) druckdicht unter Benutzung eines Deckels (36) abnehmbar zugeordnet ist.

## Claims

1. Electrically powered device for preparing infusions, such as coffee, tea or the like, in particular an automatic coffee maker (10) with a housing (11) in the form of a pot whose interior is subdivided by at least one partition wall into a fresh-water container (19) and a receiving chamber (43) for the finished beverage with a pouring opening (44), whereby the fresh-water container (19) accommodates a rising pipe (20) through which the water heated by means of a heater can be fed to a filter (38) holding the ground coffee or the like and provided with a lid (36), and through the outlet of said filter the finished beverage flows down into the receiving chamber (43), whereby, on the one hand, the filter element (38 or 70) is arranged in a pressure-tight manner between the fresh-water container (19) and the lid (36) of the automatic coffee maker (10) and, on the other hand, devices (47 or 790) distributing the heated water over the ground coffee are assigned to the filter element (38 or 70), and through said device the heated water can be fed to the filter element (38) of the automatic coffee maker (10) from below through an opening in the bottom (39) of said element, and the distributing facility of the filter element is designed as a distributing nozzle,
characterised in that
the bottom (39) of the filter element (38) has a connection tube (45) which can be joined to the rising pipe (20), said tube being connected to the distributing nozzle (47) protruding into the filter chamber (54).

2. A device according to claim 1, characterised in that the distributing nozzle (47) has a top limiting wall (66) lying at right angles to the water feeding facility, and onto which are attached connecting arms (67) whose other ends join the bottom (39) of the filter element (38) and which enclose the discharge openings (68) between them.

3. A device according to claim 2, characterised in that the connecting arms (67) and the discharge openings (68) of the distributing nozzle (47) are each of identical design and arranged on the envelope of a hollow cone whose opening with the smallest diameter is sealed by the limiting wall (66).

4. A device according to one or more of the preceding claims, characterised in that the side wall (55) of the filter chamber (54) of the filter element (38) exhibits outlet openings (42) to which a common filter, preferably a permanent filter, is assigned.

5. A device according to claim 4, characterised in that the filter is designed as an annular filter (63) consisting of a frame (64) to which a permanent filter (65) is attached in such a way that rectangular openings are left clear.

6. A device according to claims 4 and 5, characterised in that the annular filter (63) is attached by a holding ring (56) to the side wall (55) of the filter element (38).

7. A device according to claim 6, characterised in that the holding ring (56) consists of an upper ring (57) and a lower ring (58) which are joined to each other by connecting webs (59) in such a way that rectangular openings (60) are left clear.

8. A device according to claims 6 and 7, characterised in that the lower ring (58) of the holding ring (56) protrudes into a positioning space (62) of the bottom (39) of the filter element (38) while the outside of the upper ring (57) rests against a support surface (61) of the side wall (55) of the filter element (38), the outlet openings (42) lying between the support surface (61) and the upper edge of the positioning space (62).

9. A device according to claims 6 to 8, characterised in that the holding ring (56) is firmly attached, preferably welded, to the side wall (55) of the filter element (38).

10. A device according to claim 1, characterised in that the filter element (70) arranged in a pressure-tight manner between the fresh-water container (19) and the lid (36) consists of a bottom section (71) and a top section (72), which combine to form one assembly having feed channels (75 and 76) for the heated water and fitted with a distributing sieve (79) which lies above the ground coffee and which in turn is arranged on a filter, in particular a paper filter, under which drainage bores (85) are located and downstream of said bores an outlet (91) is situated which opens into the receiving chamber (43) of the automatic coffee maker (10).

11. A device according to claim 10, characterised in that the bottom section (71) of the filter element (70) has a connecting socket (73) to the rising pipe (20), said socket being provided with a bore (74) which opens out into an enlargement (90) from which cross channels (75) originate, said channels being connected to longitudinal channels (76) at whose ends a discharge opening (77), the distributing sieve (79) being arranged downstream of said opening.

12. A device according to claim 11, characterised in that a preferably conical distributing surface protrudes into the enlargement (90) of the filter element (70), the tip of said surface facing the bore (74) of the connecting socket (73).

13. A device according to claims 10 to 12, characterised in that the filter sieve (79) rests by means of a bearing surface (80) on the end face of the top section (72) of the filter element (70).

14. A device according to claim 10, characterised in that the distributing sieve (79) is positioned directly on the ground coffee in the filter chamber of the filter element (70).

15. A device according to claims 10 and 11, characterised in that the cross channels (75) emanate in a star shape from the enlargement (90) of the bottom section (71) of the filter element (70) while the longitudinal bores (76) are arranged near the peripheral surface of the top section (72) and lie on a circle whose centre (108) coincides with that of the top section which has a circular cross section.

16. A device according to claim 15, characterised in that the drainage bores (85) in the top section (72) of the filter element (70) also lie on a circle whose diameter is, however, many times smaller than the diameter of the circle on which the longitudinal channels lie.

17. A device according to claims 15 and 16, characterised in that ribs (87) emanate in a star shape from the centre (108) of the top section (72) of the filter element (70), said ribs running right up to the limiting walls of the filter chamber.

18. A device according to claim 17, characterised in that short ribs (88) emanate from the limiting walls of the filter chamber, each of said ribs lying in the middle between two long ribs (87) and being aligned with the centre (108) of the top section (72) of the filter element (70) and each ending at a distance from a drainage bore (85).

19. A device according to claims 17 and 18, characterised in that inclined surfaces (89) are arranged on both sides of each long row (87).

20. A device according to claim 1, characterised in that the rising pipe has holding ribs (23) and that the housing (11), the fresh-water container (19), the rising pipe (20) and the holding ribs (23) are combined to form a single-part assembly with which the filter element (70) has a pressure-tight connection, said filter element being removable using a lid (36).

## Revendications

1. Machine électrique pour la préparation de boissons chaudes, telles que café, thé ou analogue, en particulier cafetière automatique (10) avec un carter (11) ayant la forme d'un petit broc, dont l'espace intérieur est subdivisé, par au moins une paroi de séparation, en un récipient à eau neuve (19) et en une enceinte de captage (43) pourvue d'un orifice de versement (44), pour la boisson terminée, où dans le récipient à eau neuve (19) est disposé un tube de montée (20) au moyen duquel l'eau, chauffée à l'aide d'un système de chauffage, est susceptible d'être amenée à un filtre (38) recevant la mouture de café ou analogue, avec un couvercle (36), filtre à travers la sortie duquel la boisson terminée s'écoule dans l'enceinte de captage (43), où, d'une part, le corps de filtre (38, respectivement 70) est disposé, de façon étanche à la pression, entre le récipient à eau neuve (19) et le couvercle (36) et, d'autre part, des dispositifs (47, respectivement 79) distribuant l'eau chauffée sur la mouture de café sont associés aux corps de filtre (38, respectivement 70) et où l'eau chauffée est susceptible d'être amenée par le bas, à travers une ouverture ménagée dans son fond (39), au corps de filtre (38) de la cafetière automatique (10) et le dispositif de distribution du corps de filtre étant réalisé sous forme de buse distributrice, caractérisé en ce que le fond (39) du corps de filtre (38) présente un tube de raccordement (45) susceptible d'être relié au tube de montée (20) et relié à la buse distributrice (47) pénétrant dans l'enceinte à filtre (54).

2. Machine selon la revendication 1, caractérisée en ce que la buse distributrice (17) présente une paroi de limitation supérieure (66), située transversalement par rapport aux dispositifs d'amenée d'eau, à laquelle se raccorde des nervures de liaison (67) dont les autres extrémités se transforment en le fond (39) du corps de filtre (38) et font entre elles les ouvertures de sortie (68).

3. Machine selon la revendication 2, caractérisée en ce que les nervures de liaison (67) et les ouvertures de sortie (68) de la buse distributrice (47) sont toutes de forme identique et situées sur l'enveloppe d'un cône creux dont l'orifice présentant le plus petit diamètre est obturé par la paroi de limitation (66).

4. Machine selon l'une ou plusieurs des revendications précédentes, caractérisée en ce que la paroi latérale (55) de l'enceinte à filtre (54) du corps de filtre (38) présente des passages de sortie (42) auxquels est associé un filtre commun, de préférence un filtre permanent.

5. Machine selon la revendication 4, caractérisée en ce que le filtre est réalisé sous forme de bague filtre (63), composée d'un cadre (64) auquel est fixé un filtre permanent (65), laissant le passage à des fenêtres.

6. Machine selon les revendications 4 et 5, caractérisée en ce que la bague filtre (63) est fixée sur la paroi latérale (55) du corps de filtre (38), au moyen d'une bague de maintien (56).

7. Machine selon la revendication 6, caractérisée en ce que la bague de maintien (56) est composée d'une bague supérieure (57) et d'une bague inférieure (58) réunies par l'intermédiaire de nervures de liaison (59), en laissant le passage à des fenêtres (60).

8. Machine selon les revendications 6 et 7, caractérisée en ce que la bague inférieure (58) de la bague de maintien (56) s'engage dans un espace de palier (62) du fond (39) du corps de filtre (38), tandis que la bague supérieure (57) appuie par sa face extérieure sur une face d'appui (61) de la paroi latéral (55) du corps de filtre (38), les passages de sortie (42) étant situés entre la face d'appui (61) et l'arête supérieure de l'espace de palier (62).

9. Machine selon les revendications 6 à 8, caractérisée en ce que la bague de maintien (56) est reliée rigidement à la paroi latérale (55) du corps de filtre (38), de préférence par soudage.

10. Machine selon la revendication 1, caractérisée en ce que le corps de filtre (70), disposé de façon étanche entre le récipient à eau neuve (19) et le couvercle (36), est composé d'une partie inférieure (71) et d'une partie supérieure (72), réunies en un ensemble de construction, présentant des canaux d'amenée (75) respectivement (76) pour l'eau chauffée et équipé d'un tamis distributeur (79), placé au début de la mouture de café, disposé de son côté au-dessus d'un filtre, en particulier un filtre en papier, en dessous duquel se trouvent des orifices d'évacuation (85), en aval desquels est mise en circuit une évacuation (91) débouchant dans l'enceinte de captage (43) de la cafetière automatique (10).

11. Machine selon la revendication 10, caractérisée en ce que la partie inférieure (71) du corps de filtre (70) présente une tubulure de liaison (73) vers le tube montant (20), pourvue d'un perçage (74) se transformant en un agrandissement (90), d'où partent les canaux transversaux (75), reliés aux canaux longitudinaux (76), aux extrémités desquels se trouve une ouverture de sortie (77) placée en aval du tamis distributeur (79).

12. Machine selon la revendication 1, caractérisée en ce qu'une surface distributrice, de préférence conique, dont la pointe est tournée vers le perçage (74) de la tubulure de liaison (73), pénètre dans l'élargissement (90) du corps de filtre (70).

13. Machine selon les revendications 10 à 12, caractérisée en ce que le tamis filtrant (79) repose sur la face frontale de la partie supérieure (12) du corps de filtre (70) au moyen d'une face d'appui (80).

14. Machine selon les revendications 10 à 12, caractérisée en ce que le tamis distributeur (79) est monté directement sur la mouture de café se trouvant dans l'enceinte à filtre du corps de filtre (70).

15. Machine selon les revendications 10 à 11, caractérisée en ce que les canaux transversaux (75) partent, en forme d'étoile, depuis l'élargissement (90) de partie inférieure (71) du corps de filtre (79), tandis que les perçages longitudinaux (76) sont disposés à proximité de la surface périphérique de la partie supérieure (72) et sont situés sur un cercle dont le centre (108) coïncide avec celui de la partie supérieure à section transversale circulaire.

16. Machine selon la revendication 15, caractérisée en ce que les orifices de versement (85) ménagés dans la partie supérieure (72) du corps de filtre (70) sont également situés sur un cercle, dont le diamètre est cependant plusieurs fois inférieur à celui du cercle sur lequel se trouve les canaux longitudinaux.

17. Machine selon les revendications 15 et 16, caractérisée en ce que des nervures (87) partent en forme d'étoile depuis le centre (108) de la partie supérieure (72) du corps de filtre (70) et s'étendent jusqu'aux parois délimitation de l'enceinte à filtre.

18. Machine selon la revendication 17, caractérisée en ce que des nervures courtes (88) partent des parois de limitation de l'enceinte à filtre et sont situées chaque fois à mi-chemin entre deux nervures longues (87) orientées vers le centre (108) de la partie supérieure (72) du corps de filtre (70) et se terminent chacune à distance d'un orifice de limitation (85).

19. Machine selon les revendications 17 et 18, caractérisée en ce que des faces inclinées (89) sont disposées des deux côtés de chaque rangée longue (87).

20. Machine selon la revendication 1, caractérisée en ce que le tube montant présente des nervures de maintien (23) et que le carter (11), le récipient à eau neuve (19), le tube montant (20) et les nervures de maintien (23) sont groupés en un ensemble de construction réalisé d'une seule pièce, auquel le corps de filtre (70) est associé de façon amovible et étanche à la pression, en utilisant un couvercle (36).
